# EUROPEAN PATENT APPLICATION

(11) **EP 4 497 615 A1**
(43) Date of publication of application: **29.01.2025**
(21) Application number: 24185660.8
(22) Date of filing: 01.07.2024
(51) Int. Cl.: B60H 1/00, B60K 11/04, F25B 43/00, B60H 1/32, H02K 9/19

(54) **ACCUMULATOR AND VEHICLE DRIVING DEVICE**

(30) Priority: 26.07.2023 JP 2023121761
(71) Applicant: Aisin Corporation, Aichi 448-8650 (JP)
(72) Inventor: HASHIMOTO, Atsunori, Kariya 448-8650 (JP)
(74) Representative: Kramer Barske Schmidtchen Patentanwälte PartG mbB

(57) **Abstract**

In an accumulator (25) that separates a liquid refrigerant (M) from a gas refrigerant (G) used for cooling and heating in a vehicle interior of a vehicle, heat is exchanged between a coolant that cools any one of a motor (1) that drives the vehicle and a power conversion module (5) that operates the motor (1), and at least one of the gas refrigerant (G) and the liquid refrigerant (M) stored in the accumulator (25).

## Description

### TECHNICAL FIELD

The present disclosure relates to an accumulator and a vehicle driving device.

### BACKGROUND DISCUSSION

In general, a refrigeration cycle for an air conditioner used in a vehicle basically includes a compressor, a condenser, an expansion valve, and an evaporator. Based on such a refrigeration cycle, there is an accumulator-type refrigeration cycle in which an accumulator is disposed between the evaporator and the compressor in order to prevent liquid return to the compressor.

JP 2001-66022 A discloses an accumulator-type heat exchanger in which refrigerants exchanges heat with each other to increase heat absorbing capability due to subcooling in order to enhance a cooling effect. The heat exchanger disclosed in JP 2001-66022 A includes a cylindrical outer casing, a cylindrical inner tank coaxially disposed in the casing, and a heat exchange path spirally provided in a cylindrical space between the outer casing and the inner tank. In this heat exchanger, heat is exchanged between the outgoing refrigerant spirally flowing through the heat exchange path and the return refrigerant in the inner tank, so that the outgoing refrigerant is subcooled and the return refrigerant is overheated.

The accumulator is required to be installed in a narrow space where many devices in an engine room exist in a complicated manner. For example, in an automobile (Hybrid electric vehicle (HEV), plug-in hybrid electric vehicle (PHEV), battery electric vehicle (BEV), fuel cell electric vehicle (FCEV), and the like) provided with a motor as a traveling drive source, the accumulator is often attached to and integrally mounted on a vehicle driving device such as an e-Axle. In addition, a motor integrated with the vehicle driving device and a gear that decelerates motor rotation are cooled by oil, and an oil cooler that exchanges heat with cooling water is mounted. In many cases, the oil cooler is also attached to and integrated with the vehicle driving device. In a case where both the accumulator and the oil cooler are attached and integrated, there is a possibility that the vehicle driving device is large and the mountability on the vehicle is deteriorated.

A need this exists for a vehicle driving device that is more compact than a conventional vehicle driving device, and an accumulator used in the vehicle driving device.

### SUMMARY

One embodiment of an accumulator according to the present disclosure is an accumulator that separates a liquid refrigerant from a gas refrigerant used for cooling and heating in a vehicle interior of a vehicle, wherein heat is exchanged between a coolant that cools any one of a motor that drives the vehicle and a power conversion module that operates the motor, and at least one of the gas refrigerant and the liquid refrigerant stored in the accumulator.

According to the accumulator of the present embodiment, heat exchange can be performed between the coolant flowing through one of the motor and the power conversion module and at least one of the gas refrigerant and the liquid refrigerant stored in the accumulator. Therefore, it is not necessary to provide a dedicated cooling device for cooling the coolant. Alternatively, even when a cooling device is provided, the coolant is cooled by heat exchange performed by at least one of the gas refrigerant and the liquid refrigerant stored in the accumulator, so that the coolant can be sufficiently cooled using a cooling device smaller than the conventional cooling device. In the former case, since it is not necessary to provide a cooling device, the vehicle driving device can be configured more compactly than the conventional case.

One embodiment of a vehicle driving device according to the present disclosure includes the motor, the power conversion module, a housing that accommodates at least the motor and the power conversion module, and the actuator described above attached to the housing.

Since the vehicle driving device of the present embodiment includes the actuator described above, it is not necessary to provide a cooling device in the vehicle driving device, or a small cooling device can be used. Therefore, the vehicle driving device can be made more compact than the conventional one.

### BRIEF DESCRIPTION OF THE DRAWINGS

The foregoing and additional features and characteristics of this disclosure will become more apparent from the following detailed description considered with the reference to the accompanying drawings, wherein:
Fig. 1 is an exploded perspective view illustrating a vehicle driving device according to the first embodiment;
Fig. 2 is a block diagram illustrating a circuit configuration of a vehicle driving device and a heating module;
Fig. 3 is a cross-sectional view of an accumulator;
Fig. 4 is a cross-sectional view of an accumulator according to a modification of the first embodiment;
Fig. 5 is an exploded perspective view illustrating a vehicle driving device according to the second embodiment; and
Fig. 6 is a block diagram illustrating a circuit configuration of a vehicle driving device and a heating module.

### DETAILED DESCRIPTION

Hereinafter, embodiments of an accumulator and a vehicle driving device according to the present disclosure will be described in detail with reference to the drawings. The accumulator and the vehicle driving device according to the present embodiment are used for an automobile (hybrid electric vehicle (HEV), plug-in hybrid electric vehicle (PHEV), battery electric vehicle (BEV), fuel cell electric vehicle (FCEV), and the like) including a motor as a traveling drive source. Hereinafter, these automobiles are collectively referred to as "electric vehicles". Note that the embodiments described below are examples for describing the present disclosure, and the present disclosure is not limited only to these embodiments. Therefore, the present disclosure can be implemented in various forms without departing from the gist thereof.

### [First Embodiment]

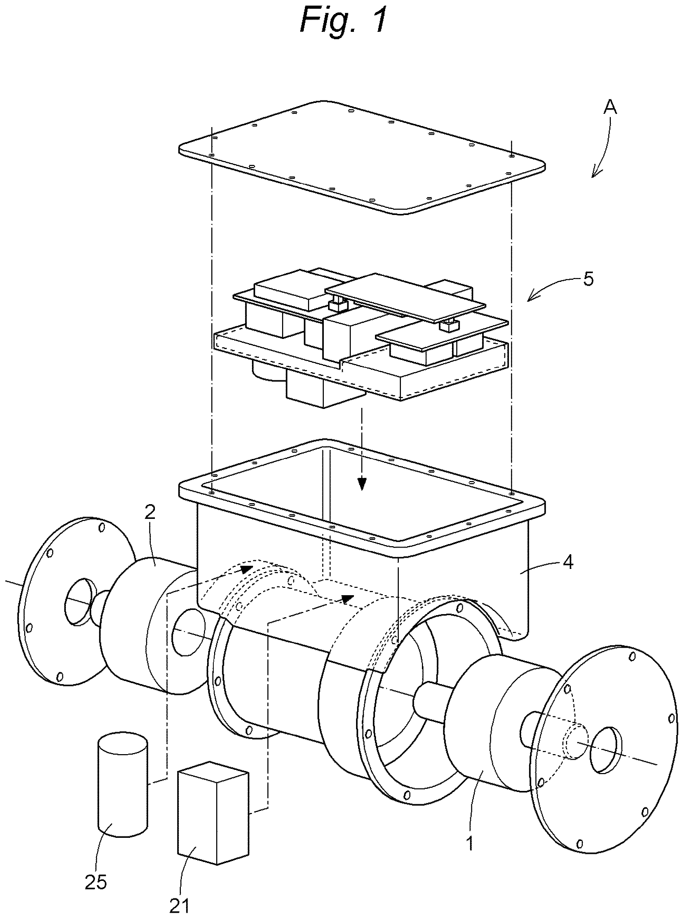

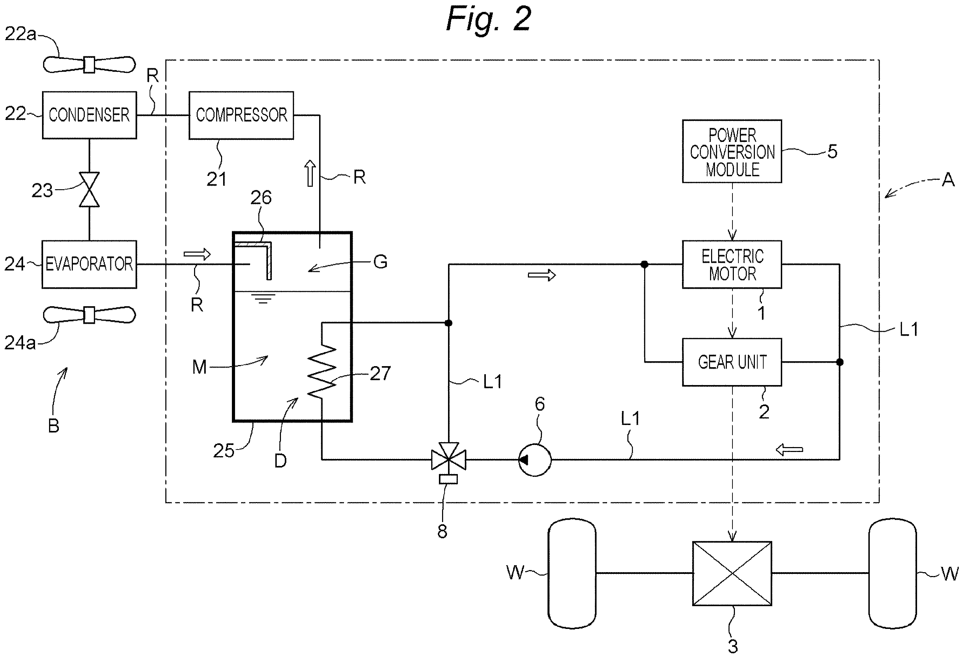

As illustrated in Figs. 1 and 2, a vehicle driving device A according to the first embodiment includes an electric motor 1 (an example of a motor), a gear unit 2, a power conversion module 5, an oil pump 6, a switching valve 8, a compressor 21, and an accumulator 25. In the vehicle driving device A, the electric motor 1, the gear unit 2, the power conversion module 5, the oil pump 6, and the switching valve 8 are housed in and integrated with a housing 4. The compressor 21 and the accumulator 25 are attached to and integrated with a side wall of the housing 4. The integration includes a state in which the units are fastened and fixed to the outer face of the housing 4 with a bolt or the like (hereinafter, the same shall apply).

The electric motor 1 is a traveling drive source of the electric vehicle. The gear unit 2 decelerates and outputs the rotational driving force of the electric motor 1. The power conversion module 5 includes an inverter and controls a drive current for driving the electric motor 1. That is, the vehicle driving device A decelerates the rotational driving force of the electric motor 1 driven by the drive current controlled by the power conversion module 5 by the gear unit 2 and then outputs the rotational driving force to the outside. The output from the vehicle driving device A is transmitted to left and right wheels W via a differential gear 3. The compressor 21 and the accumulator 25 are used in a heating module B described later. Part of the accumulator 25 constitutes a heat exchange unit D described later.

Inside the vehicle driving device A, a first coolant flow path L1 through which oil (an example of a coolant) for cooling the electric motor 1 and the gear unit 2 flows is disposed. An example of the oil is an insulating oil such as paraffin. The oil pump 6 is disposed in the middle of the first coolant flow path L1, and pumps oil flowing through the first coolant flow path L1. The switching valve 8 is configured to switch the flow path of the oil pumped by the oil pump 6 between a cooling position and a non-cooling position. Specifically, at the cooling position, the oil flowing through the first coolant flow path L1 is supplied to the heat exchange unit D, cooled, and then supplied to the electric motor 1 and the gear unit 2. At the non-cooling position, the oil flowing through the cooling flow path L is supplied to the electric motor 1 and the gear unit 2 without being cooled.

The heating module B includes the electric compressor 21, a condenser 22, an expansion valve 23, an evaporator 24, the accumulator 25, and a refrigerant flow path R through which a gas refrigerant G circulates. As described above, in the heating module B, the compressor 21 and the accumulator 25 are attached to the housing 4 of the vehicle driving device A. The heating module B is configured as a heat pump, and hydrofluorocarbon (HFC), hydrofluoroolefin (HFO), or the like is used as the gas refrigerant G.

The condenser 22 is disposed in the vehicle interior. The condenser 22 includes an electrically-driven blower 22a that sends the warmed air into the vehicle interior. In the heating module B, the gas refrigerant G is compressed by the compressor 21 to have a high temperature and a high pressure, and is liquefied in the condenser 22 to release heat energy (condensation heat) of the gas refrigerant G into the vehicle interior by the blower 22a. As a result, the temperature in the vehicle interior is increased. In the condenser 22, the gas refrigerant G is a liquid refrigerant M.

The liquid refrigerant M having passed through the condenser 22 expands at the expansion valve 23 to have a low pressure, and is sent to the evaporator 24. In the evaporator 24, the liquid refrigerant M absorbs heat and evaporates. The evaporator 24 includes an electric evaporation fan 24a for obtaining heat energy for evaporating the liquid refrigerant M. Most of the refrigerant vaporized by passing through the evaporator 24 is the gas refrigerant G, but the liquid refrigerant M that is atomized liquid is partially contained. The gas refrigerant G containing the liquid refrigerant M is sent to the accumulator 25.

The accumulator 25 separates the gas refrigerant G containing the liquid refrigerant M supplied from the evaporator 24 into gas and liquid. That is, the liquid refrigerant M is separated from the gas refrigerant G containing the liquid refrigerant M. The accumulator 25 has a vertically long cylindrical structure for storing the gas-liquid separated liquid refrigerant M, and the gas-liquid separated liquid refrigerant M is stored at the bottom. The position of the end of the refrigerant flow path R of the accumulator 25 is set such that the gas refrigerant G can be supplied to the compressor 21 from above the liquid level of the liquid refrigerant M.

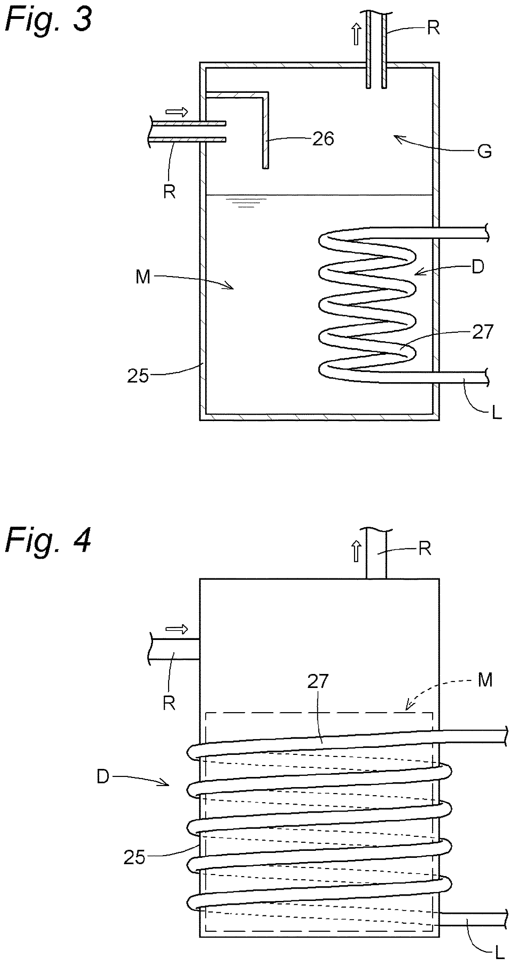

As illustrated in Fig. 3, the accumulator 25 internally includes a regulation plate 26 that weakens the pressure of the gas refrigerant G supplied from the evaporator 24. The regulation plate 26 is provided to achieve gas-liquid separation by collision of the gas refrigerant G containing the atomized liquid refrigerant M and to prevent the liquid refrigerant M from blowing up due to the pressure of the gas refrigerant G supplied from the evaporator 24.

The heat exchange unit D includes a heat exchange flow path 27 (an example of a piping unit) made of a spirally formed metal pipe having a high thermal conductivity, the heat exchange flow path being disposed so as to pass through the inside (inner side) of the accumulator 25. The heat exchange flow path 27 is disposed to be immersed in the liquid refrigerant M stored in the accumulator 25. The upstream end of the heat exchange flow path 27 is connected to the switching valve 8, and the downstream end joins the first coolant flow path L1 downstream of the switching valve 8. Oil flowing through the first coolant flow path L1 flows inside the heat exchange flow path 27 when the switching valve 8 is switched to the cooling position.

Next, the flow of the oil in the first coolant flow path L1 will be described. The oil circulates in the first coolant flow path L1 by the oil pump 6. That is, the first coolant flow path L1 is disposed so that the oil circulates through the electric motor 1, the gear unit 2, the oil pump 6, the switching valve 8, and the heat exchange unit D. Specifically, the oil flowing through the first coolant flow path L1 is heated by absorbing heat from the electric motor 1 and the gear unit 2 that generate heat by driving. The heated oil is pressurized by the oil pump 6 and sent to the switching valve 8. When the switching valve 8 is switched to the cooling position, the oil is supplied to the inside of the accumulator 25 and flows through the heat exchange flow path 27. The oil flowing through the heat exchange flow path 27 is cooled by heat exchange with the liquid refrigerant M. Since the heat exchange flow path 27 is disposed so as to be immersed in the liquid refrigerant M inside the accumulator 25 and is formed of a metal pipe having a high thermal conductivity, heat exchange can be efficiently performed between the oil and the liquid refrigerant M. The oil cooled by the liquid refrigerant M flows out of the accumulator 25 and joins the first coolant flow path L1 downstream of the switching valve 8. The oil cooled by the heat exchange unit D is returned to the electric motor 1 and the gear unit 2, and is heated again by absorbing heat from the electric motor 1 and the gear unit 2.

When the amount of heat generated in the electric motor 1 and the gear unit 2 is small and the oil is not heated to such an extent that heat exchange (cooling) in the heat exchange unit D is necessary, the switching valve 8 is switched to the non-cooling position. As a result, the oil flowing through the first coolant flow path L1 is returned to the electric motor 1 and the gear unit 2 again without supplied to the heat exchange unit D and being cooled. The switching of the switching valve 8 is performed based on the temperature of the oil detected by a temperature sensor (not illustrated).

As described above, in the vehicle driving device A of the present embodiment, the oil heated by the heat generation of the electric motor 1 and the gear unit 2 is cooled not by the oil cooler but by the heat exchange unit D having the heat exchange flow path 27 configured to be able to exchange heat with the liquid refrigerant M of the accumulator 25. This eliminates the need for an oil cooler for cooling the oil, so that the vehicle driving device A can be made more compact than the conventional one.

### [Modification of First Embodiment]

Next, a configuration of a vehicle driving device A according to a modification of the first embodiment will be described with reference to Fig. 4. The configuration of the heat exchange unit D in the present modification is different from that in the first embodiment. In the present modification, the heat exchange flow path 27 constituting the heat exchange unit D is not disposed so as to be immersed in the liquid refrigerant M stored inside the accumulator 25, but is disposed so as to be wound around an outer periphery (outside) of the accumulator 25, the outer periphery corresponding to a place where
the liquid refrigerant M is stored. Even with the heat exchange unit D configured as described above, heat exchange can be performed between the oil flowing through the heat exchange flow path 27 and the liquid refrigerant M inside the accumulator 25, and the oil can be cooled.

### [Second Embodiment]

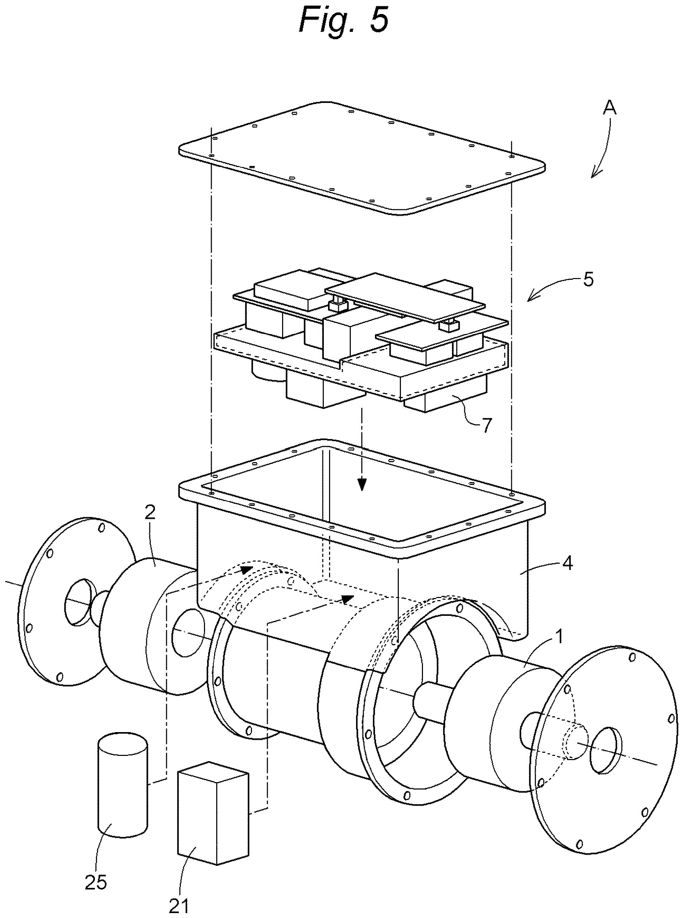

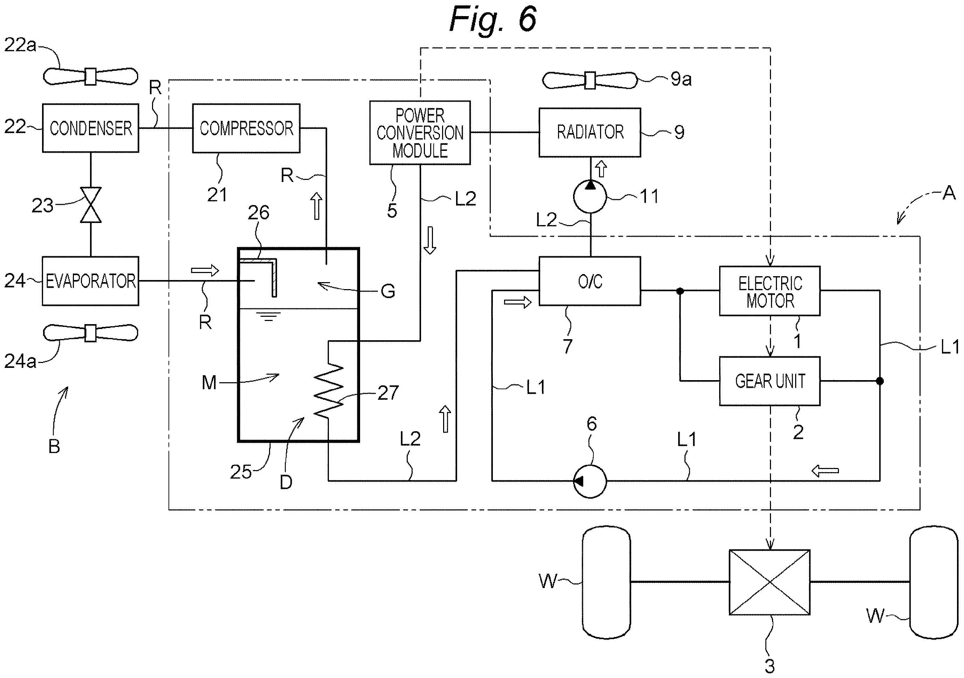

Next, a configuration of a vehicle driving device A according to the second embodiment will be described with reference to Figs. 5 and 6. Unlike the first embodiment, the vehicle driving device A in the present embodiment includes an oil cooler 7. The coolant flowing through the heat exchange flow path 27 is not oil but cooling water (an example of the coolant). Therefore, the vehicle driving device A of the present embodiment does not include the switching valve 8 that switches the first coolant flow path L1. Other configurations are similar to those of the first embodiment. Therefore, in the description of the present embodiment, portions having the same configurations as those of the first embodiment are denoted by the same reference numerals, and detailed description of the same configurations is omitted.

In the present embodiment, the oil cooler 7 is attached to and integrated with the power conversion module 5, and is housed in the housing 4 (see Fig. 5). Therefore, the housing 4 of the present embodiment is slightly larger than that of the first embodiment.

The first coolant flow path L1 of the present embodiment is disposed so that the oil circulates through the electric motor 1, the gear unit 2, the oil pump 6, and the oil cooler 7. The oil cooler 7 is configured to exchange heat between the oil flowing through the first coolant flow path L1 and the cooling water flowing through a second coolant flow path L2. As the cooling water, a long life coolant (LLC) containing ethylene glycol, propylene glycol, or the like is used.

As illustrated in Fig. 6, in the present embodiment, a radiator 9 and an electric water pump 11 are provided outside the housing 4. The radiator 9 and the water pump 11 are disposed in the middle of the second coolant flow path L2. In the second coolant flow path L2, the water pump 11, the radiator 9, the power conversion module 5, and the heat exchange flow path 27 are disposed in this order downstream of the oil cooler 7. That is, the cooling water flowing through the second coolant flow path L2 flows through the oil cooler 7, the water pump 11, the radiator 9, the power conversion module 5, and the heat exchange flow path 27, and returns to the oil cooler 7. The heat exchange flow path 27 is part of the second coolant flow path L2. The radiator 9 includes an electric radiator fan 9a. In Fig. 6, the heat exchange flow path 27 is illustrated as a configuration to be immersed in the liquid refrigerant M inside the accumulator 25 as illustrated in Fig. 3. However, the heat exchange flow path 27 is not limited to the configuration of Fig. 3, and may be configured to be wound around an outer periphery of the accumulator 25, the outer periphery corresponding to a place where
the liquid refrigerant M is stored as illustrated in Fig. 4.

In the present embodiment, the oil that has absorbed heat from the electric motor 1 and the gear unit 2 flows through the first coolant flow path L1 and is pressurized by the oil pump 6. Thereafter, the oil flows into the oil cooler 7, exchanges heat with the cooling water flowing through the second coolant flow path L2 to be cooled, and then returns to the electric motor 1 and the gear unit 2. Then, heat is absorbed again from the electric motor 1 and the gear unit 2 and heated.

The cooling water heated by heat exchange with the oil in the oil cooler 7 flows through the second coolant flow path L2, is pressurized by the water pump 11, and is then supplied to the radiator 9. Then, the cooling water cooled by the radiator 9 is supplied to the power conversion module 5, and is heated by absorbing heat generated by the inverter of the power conversion module 5. Thereafter, the heated cooling water is supplied to the inside of the accumulator 25 and flows through the heat exchange flow path 27 of the heat exchange unit D. The cooling water flowing through the heat exchange flow path 27 is cooled by heat exchange with the liquid refrigerant M. The cooled cooling water flows out of the accumulator 25 and returns to the oil cooler 7. Then, heat is exchanged with the oil again to be heated.

In the related art, the cooling water is directly supplied to the oil cooler 7 after being heated by the power conversion module 5. Therefore, in order to perform sufficient heat exchange between the high-temperature cooling water and the oil in the oil cooler 7, it is necessary to increase a flow path length in which the cooling water and the oil face each other, and the oil cooler 7 is increased in size. However, in the present embodiment, the cooling water heated by the power conversion module 5 is supplied to the heat exchange unit D formed in the accumulator 25, and is cooled by heat exchange with the liquid refrigerant M. Therefore, the temperature of the cooling water supplied to the oil cooler 7 is lower than the conventional temperature, and it is possible to perform necessary heat exchange with the oil even if the flow path length in which the cooling water and the oil face each other is not long. That is, since the oil cooler 7 that is smaller than the conventional one can be used, the vehicle driving device A can be made compact.

### [Another embodiment]

The present disclosure may be configured as follows in addition to the above embodiment and modifications thereof (those having the same functions as those of the embodiment are denoted by the same numbers and reference numerals as those of the embodiment).
<1> The heat exchange unit D is configured such that the cross section of the flow path of the heat exchange flow path 27 is formed in a non-circular shape such as an elliptical shape or a rectangular shape to increase the area of contact between the heat exchange flow path 27 and the liquid refrigerant M. Furthermore, as the configuration of the heat exchange unit D, the heat exchange unit D may be configured to have a fin for heat exchange on the outer face of the heat exchange flow path 27.
<2> In the above embodiments and the modifications thereof, the coolant (oil or cooling water) flowing through the heat exchange flow path 27 exchanges heat with the liquid refrigerant M stored in the accumulator 25, but may exchange heat with the gas refrigerant G instead of the liquid refrigerant M or together with the liquid refrigerant M.
<3> In the second embodiment, the accumulator 25 (heat exchange flow path 27) is disposed downstream of the power conversion module 5, but the present disclosure is not limited thereto. The accumulator 25 may be configured to be disposed upstream of the power conversion module 5, that is, between the radiator 9 and the power conversion module 5. By adding the function of cooling the cooling water by the accumulator 25 to the circuit, the cooling capacity is improved and the water temperature of the cooling water flowing into the oil cooler 7 is lowered. Therefore, even when the accumulator 25 is disposed upstream of the power conversion module 5, the cooling performance is improved as compared with the circuit in which the accumulator 25 is not added.

In the embodiments of the accumulator 25 and the vehicle driving device A described above, the following configurations are conceived.
(1) An aspect of the accumulator 25 is an accumulator 25 that separates a liquid refrigerant M from a gas refrigerant G used for cooling and heating in a vehicle interior of a vehicle, wherein heat is exchanged between a coolant that cools any one of a motor (electric motor 1) that drives the vehicle and a power conversion module 5 that operates the motor, and at least one of the gas refrigerant G and the liquid refrigerant M stored in the accumulator.

In the accumulator 25 of the present aspect, heat exchange can be performed between the coolant (oil or cooling water) flowing through any one of the motor (electric motor 1) and the power conversion module 5 and at least one of the gas refrigerant G and the liquid refrigerant M stored in the accumulator. Therefore, it is not necessary to provide a dedicated cooling device for cooling the coolant. Alternatively, even when a cooling device is provided, the coolant is cooled by heat exchange performed by at least one of the gas refrigerant G and the liquid refrigerant M stored in the accumulator 25, so that the coolant can be sufficiently cooled using a cooling device smaller than the conventional cooling device.

(2) In the accumulator 25 described in (1), it is preferable that oil serving as a coolant for cooling the motor (electric motor 1) is cooled by heat exchange.

Accordingly, the oil is cooled by exchanging heat with at least one of the gas refrigerant G and the liquid refrigerant M stored in the accumulator 25. This eliminates the need for the oil cooler 7.

(3) In the accumulator 25 described in (1) or (2), it is preferable that the coolant circulates in the piping unit (heat exchange flow path 27) disposed inside or outside the accumulator. [[0043]

Accordingly, since the coolant circulates in the piping unit (heat exchange flow path 27) that performs heat exchange inside or outside the accumulator 25, the coolant exchanges heat with at least one of the gas refrigerant G and the liquid refrigerant M stored in the accumulator 25 to be cooled.

(4) In the accumulator 25 described in (3), it is preferable that the piping unit (heat exchange flow path 27) is disposed so as to be immersed in the liquid refrigerant M, the piping unit being inside the accumulator.

When the piping unit (heat exchange flow path 27) is disposed so as to be immersed in the liquid refrigerant M, the piping unit being inside the accumulator 25, the coolant directly exchanges heat with the liquid refrigerant M via the piping unit (heat exchange flow path 27), so that heat exchange can be efficiently performed.

(5) In the accumulator 25 described in (4), it is preferable that the piping unit (heat exchange flow path 27) is formed in a spiral shape.

(6) In the accumulator 25 described in (3), it is preferable that the piping unit (heat exchange flow path 27) is disposed so as to be wound around an outside of the accumulator, the outside corresponding to a place where
the liquid refrigerant M is stored.

When the piping unit (heat exchange flow path 27) is disposed so as to be wound around an outside of the accumulator 25, the outside corresponding to a place where the liquid refrigerant M is stored, it is not necessary to arrange the piping unit (heat exchange flow path 27) inside (inner side) the accumulator 25, and thus, it is possible to easily obtain a configuration for performing heat exchange with the liquid refrigerant M.

(7) An aspect of the vehicle driving device A includes a motor (electric motor 1), a power conversion module 5, a housing 4 that accommodates at least the motor (electric motor 1) and the power conversion module 5, and the accumulator 25 according to any one of (1) to (6) attached to the housing 4.

According to the vehicle driving device A of the present aspect, since the actuator 25 according to any one of (1) to (6) is provided, it is not necessary to provide a cooling device in the vehicle driving device A, or a small cooling device can be provided. Therefore, the vehicle driving device A can be made more compact than the conventional one.

(8) In the vehicle driving device A according to (7), it is preferable that the vehicle driving device further includes the oil cooler 7 that exchanges heat between the cooling water serving as the coolant for cooling the power conversion module 5 and the oil serving as the coolant for cooling the motor (the electric motor 1), wherein the cooling water exchanges heat with the oil in the oil cooler 7 after being cooled by heat exchange in the accumulator 25.

In the related art, in order to perform sufficient heat exchange between the cooling water and the oil in the oil cooler 7, it is necessary to increase a flow path length in which the cooling water and the oil face each other, and the oil cooler 7 is increased in size. However, in this configuration, the cooling water heated by the power conversion module 5 is cooled by exchanging heat with at least one of the gas refrigerant G and the liquid refrigerant M stored in the accumulator 25. Therefore, the temperature of the cooling water supplied to the oil cooler 7 is lower than the conventional temperature, and it is possible to perform necessary heat exchange with the oil even if the flow path length in which the cooling water and the oil face each other is not long. That is, since the oil cooler 7 that is smaller than the conventional one can be provided, the vehicle driving device A can be made more compact than the conventional one.

The present disclosure can be used for an accumulator and a vehicle driving device.

It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. An accumulator (25) that separates a liquid refrigerant (M) from a gas refrigerant (G) used for cooling and heating in a vehicle interior of a vehicle, wherein
heat is exchanged between a coolant that cools any one of a motor (1) that drives the vehicle and a power conversion module (5) that operates the motor (1), and at least one of the gas refrigerant (G) and the liquid refrigerant (M) stored in the accumulator (25).

2. The accumulator (25) according to claim 1, wherein oil serving as the coolant for cooling the motor (1) is cooled by heat exchange.

3. The accumulator (25) according to claim 1 or 2, wherein the coolant circulates in a piping unit disposed inside or outside of the accumulator (25).

4. The accumulator (25) according to claim 3, wherein the piping unit is disposed so as to be immersed in the liquid refrigerant (M), the piping unit being inside the accumulator (25).

5. The accumulator (25) according to claim 3 or 4, wherein the piping unit is formed in a spiral shape.

6. The accumulator (25) according to claim 3, wherein the piping unit is disposed so as to be wound around an outside of accumulator (25), the outside corresponding to a place where
the liquid refrigerant (M) being stored.

7. A vehicle driving device comprising: the motor (1); the power conversion module (5); a housing (4) that accommodates at least the motor (1) and the power conversion module (5); and the accumulator (25) according to claim 1 or 2 attached to the housing (4).

8. The vehicle driving device according to claim 7, further comprising: an oil cooler (7) that exchanges heat between cooling water serving as the coolant for cooling the power conversion module (5) and oil serving as the coolant for cooling the motor (1), wherein the cooling water exchanges heat with the oil in the oil cooler (7) after being cooled by heat exchange in the accumulator (25).
